# EUROPÄISCHE PATENTSCHRIFT

(11) **EP 3 691 792 B1**
(45) Veröffentlichungstag und Bekanntmachung des Hinweises auf die Patenterteilung: **09.12.2026**
(21) Anmeldenummer: 18778428.5
(22) Anmeldetag: 21.09.2018
(51) Int. Cl.: B02C 19/18

(54) **VERFAHREN ZUM RECYCELN VON KERAMIKEN, DANACH ERHÄLTLICHE REGENERATE UND VERWENDUNG DER REGENERATE ZUR HERSTELLUNG VON KERAMIKEN**
METHOD FOR RECYCLING CERAMICS, REGENERATED MATERIALS OBTAINED THEREBY, AND USE OF THE REGENERATED MATERIALS FOR MANUFACTURING CERAMICS
PROCÉDÉ DE RECYCLAGE DE CÉRAMIQUES, PRODUITS RÉGÉNÉRÉS AINSI OBTENUS ET UTILISATION DES PRODUITS RÉGÉNÉRÉS POUR FABRIQUER DES CÉRAMIQUES

(30) Priorität: 04.10.2017 DE 102017217611
(43) Veröffentlichungstag der Anmeldung: 12.08.2020
(73) Patentinhaber: Fraunhofer-Gesellschaft zur Förderung der angewandten Forschung e.V., 80686 München (DE)
(72) Erfinder: SEIFERT, Severin, 83064 Raubling (DE); THOME, Volker, 83727 Schliersee (DE); BACH, Jürgen, 65549 Limburg (DE)
(74) Vertreter: Friese Goeden Patentanwälte PartGmbB
(86) Internationale Anmeldenummer: PCT/EP2018/075609
(87) Internationale Veröffentlichungsnummer: WO 2019/068483

(56) Entgegenhaltungen:
- DE-A1- 19 534 232
- US-A1- 2012 132 732
- SEBASTIAN DITTRICH ET AL: "Effektive Aufbereitung von Müllverbrennungsschlacken mittels Hochspannungsimpulsen", CHEMIE INGENIEUR TECHNIK, 1 April 2016 (2016-04-01), Weinheim, pages 461 - 468, XP055522315, Retrieved from the Internet <URL:http://www.vivis.de/phocadownload/Download/2014_rur/2014_RuR_431_438_Seifert.pdf> DOI: 10.1002/cite.201500044

## Beschreibung

Die Erfindung betrifft ein Verfahren zum Recyceln von Keramiken, danach erhältliche Regenerate und die Verwendung der Regenerate zur Herstellung von Keramiken.

Viele Industriezweige sind weltweit von keramischen Erzeugnissen (Keramiken) und somit von deren Verfügbarkeit sowie deren Preis-gestaltung abhängig. Keramische Erzeugnisse wie z.B. technische und funktionelle Keramiken werden in vielen industriellen Prozessen benötigt, um verschiedenste kommerzielle Produkte herzustellen. Sie bestehen aus einer Mischung bestimmter mineralischer Kornfraktionen, die mit einer Bindermatrix und Füllstoffen versehen formgegeben werden können und so z.B. als gebrannter Stein, Spritzmasse oder Feuerbeton eingesetzt werden. Eigenschaften wie Feuerfestigkeit, mechanische Festigkeit, Langlebigkeit im Einsatz usw. ergeben sich u.a. aus der Kornzusammensetzung und der Reinheit der einzelnen mineralischen Bestandteile. Diese Keramiken fungieren in verschiedenen industriellen Prozessen als Verbrauchs- bzw. Verschleißmaterialien, welche regelmäßig durch neues Material ersetzt werden müssen, um die Produktion am Laufen zu halten. Besonders feuerfeste Keramiken sind für viele Industriezweige von immenser Bedeutung. Bei diesen keramischen Werkstoffen handelt es sich um Erzeugnisse, die unter einer Hochtemperaturbelastung in der Regel zur Auskleidung und Zustellung von wärmetechnischen Anlagen, wie z.B. Hochöfen, Konvertern, Schmelz- und Transportgefäßen in der Eisen- und Stahl, NE-Metall-, Zementsowie Keramischen Industrie und auch Müllverbrennungsanlagen, Raffinerien oder Kraftwerksanlagen eingesetzt werden. Dort begrenzen sie die Reaktionsräume und kommen mit festen, flüssigen aber auch gasförmigen, teilweise sehr aggressiven Reaktionskomponenten und Reaktionsprodukten in Kontakt. Ohne diese feuerfesten Werkstoffe gäbe es keine technischen thermischen Prozesse, welche z.B. für die Herstellung von Stahl, Eisen, Aluminium, Zement und Glas grundlegend sind. Auch Anlagen zur Energie-versorgung bzw. Entsorgung von Reststoffen benötigen keramische Auskleidungen.

Allein in der Feuerfestindustrie werden in Deutschland jährlich ca. 1 Mio. Tonnen geformte feuerfeste Erzeugnisse und 600.000 Tonnen ungeformte feuerfeste Erzeugnisse produziert. Der Wert der hergestellten Produkte beziffert sich auf ca. 1,5 Mrd. Euro. In der gesamten EU wurden im Jahr 2010 ca. 4 Mio. Tonnen feuerfeste Steine und 2 Mio. Tonnen feuerfeste Massen im Gesamtwert von ca. 4 Mrd. Euro produziert. Die Rohstoffressourcen für diesen Industriezweig liegen mittlerweile außerhalb der EU, vor allem in China, was eine große Abhängigkeit hervorruft.

Für die Herstellung von Keramiken werden meist hochreine und preisintensive Rohstoffe bzw. Halbzeuge wie z.B. Schamotte, Bauxit, Korund bzw. Edelkorund, Tabulartonerde, Zirkon (Zirkonsilikat), Zirkonoxid und/oder Siliziumcarbid sowie andere mineralische Rohstoffe benötigt. Diese werden wiederum durch sehr aufwändige, energie- und emissionsreiche thermische Prozesse wie Kalzinierung, Sinterreaktionen oder Schmelz-flussverfahren aus oxydischen Rohstoffen hergestellt. Die größten Ressourcen für solche Rohstoffe liegen vor allem in China, Russland, Südafrika und Australien. Dementsprechend ist die deutsche, aber auch weltweite keramische Industrie stark abhängig von Importen aus diesen Ländern. Zum Beispiel werden im Zuge von derzeitigen stärker werdenden Umweltauflagen in China viele Produktionsanlagen von feuerfesten Halbzeugen heruntergefahren, so dass zeitweise diese Materialien nicht am Markt verfügbar sind oder aber nur zu höheren Preisen in nur geringen Mengen angeboten werden. Hinzu kommt eine zunehmende Verknappung von natürlichen Ressourcen was in der Zukunft zu großen wirtschaftlichen Problemen führen wird. Zum Beispiel reicht die durchschnittliche Standzeit für feuerfeste Werkstoffe von 2-3 Wochen in Schmelzöfen (Schmelzöfen in der Gießereiindustrie, Rinnen und Transportgefäße für flüssige Schmelzen) bis hin zu Ausnahmen von mehreren Jahren in Sinteröfen, Hochofen in der Stahlindustrie, Drehrohrofen in der Zementindustrie, Raffinerien oder Müll-verbrennungsanlagen. Danach muss die feuerfeste Auskleidung erneuert bzw. repariert werden. So würde ohne Nachschub von feuerfesten Werkstoffen für Hochöfen die Stahlproduktion zum Erliegen kommen, was sich wiederum auf den Anlagenbau, die Automobilindustrie und den damit verbundenen Zulieferern (Industrie sowie kleinere und mittlere Unternehmen) negativ auswirken würde. Ebenso würden fehlende feuerfeste Materialien für Drehrohröfen zum Beispiel die Zementindustrie zum Erliegen bringen, was sich direkt auf die gesamte Bauindustrie auswirken würde.

In der nahen Zukunft ist der Nachschub von vielen verschiedenen keramischen Rohstoffen bzw. keramischen Halbzeugen nicht sichergestellt und/oder die Preise werden voraussichtlich erheblich steigen. Das grundlegende Problem ist, dass es derzeit kein »echtes« Recycling von keramischen Erzeugnissen gibt. Die in der Herstellung von keramischen Erzeugnissen anfallenden Produktionsabfälle (z.B. Bruch oder Verschnitt) werden derzeit zwar teilweise wieder in der keramischen Produktion eingesetzt, jedoch sehr begrenzt. Die Abfälle werden dabei zum Teil als Bruch, also lediglich als reines Füllmaterial, in der Produktion wieder eingesetzt. Das hauptsächliche Problem dabei ist, dass gegenwärtig keine saubere Trennung der verschiedenen Inhaltsstoffe möglich ist und damit auch kein »echtes« Recycling.

Demnach ist man beim derzeitigen Stand des Recyclings von Keramiken nicht in der Lage wieder sortenreine und qualitativ hochwertige Rohmaterialien (Regenerate) aus dem Stoffsystem Keramik zu erhalten. Diese Situation wird sich zukünftig auf die darauf angewiesenen Industriezweige auswirken und somit die gesamte Wirtschaft beeinflussen.

Eine Lösung für die vorstehend beschriebene Verknappung von Rohstoffen und wirtschaftspolitischen Gegebenheiten gibt es derzeit nicht. Es wird allerdings versucht, eine Art Recycling bzw. Wiederverwertung von bereits verwendeten keramischen Werkstoffen durchzuführen. Da die meisten technischen keramischen Werkstoffe (Keramiken), besonders feuerfeste Werkstoffe, Verschleißmaterialien sind, müssen diese regelmäßig ausgetauscht oder repariert werden. Ein allgemein bekannter Weg ist der Versuch der Wiederverwertung von bereits verwendeten keramischen Materialien. Ein Großteil der Werkstoffe, welche als Auskleidung von thermischen Anlagen (z.B. Sinter- und Schmelzöfen, Transportvorrichtungen) eingesetzt werden, verschleißt komplett und ist nicht mehr nutzbar bzw. chemisch zu stark verunreinigt. Ein kleiner Teil des Materials wird jedoch nach dem Ausbrechen recycelt und als sogenanntes Regenerat für die Produktion von neuen feuerfesten bzw. keramischen Werkstoffen verwendet. Dafür wird das keramische Material mit Baggern oder per Hand aus den verschiedenen Einsatzorten (z.B. Öfen oder Konvertern) ausgebrochen und zumeist per Hand, teilweise rein visuell, grob vorsortiert. Sortierkriterien sind dabei die Sortenreinheit, Art der mineralischen Bestandteile, Anhaftungen von Verunreinigungen und die chemische Zusammensetzung soweit diese bestimmt werden kann. Anschließend werden die zu recycelten Keramiken auf mechanischen Mahlanlagen, wie z.B. Backenbrecher, Prallmühle, Kreiselmühle, Schwingmühle, Kugelmühle teilweise im Verband in die für den späteren Wiedereinsatz gewünschten Korngrößen zerkleinert. Dieses gebrochene bzw. gemahlene Material wird dann je nach Restfeuchtegehalt in Drehrohröfen auf eine Restfeuchte von 0-2 % getrocknet. Das getrocknete Material wird anschließend noch in die gebräuchlichen Siebkennlinien klassiert und kann dann als Zuschlag bzw. Regenerat für neue feuerfeste oder anderen keramische Erzeugnisse verkauft werden. Allerdings kann eine für die Feuerfestindustrie erforderliche chemische Reinheit dieser Regenerate nicht erreicht und auch nicht garantiert werden, da durch rein mechanisches Brechen bzw. Mahlen keine sortenreine und kontaminationsfreie Trennung möglich ist. Im Ergebnis kann keine saubere Kornstruktur erreicht werden. Das rein gebrochene Material ist noch mit Schlackenresten, Sinterprodukten oder alter Bindermatrix verunreinigt. Zudem führen mechanische Verfahren durch metallischen Abrieb zur Kontamination des Mahlgutes. Die wertvollen Regenerate müssten für eine hohe chemische Reinheit aus der keramischen Bindermatrix sorten- bzw. phasenrein herausgelöst werden, was durch mechanische Methoden nicht möglich ist. Aus diesen Gründen wird heutzutage nur wenig Recyclingmaterial (ca. 10 - 20 %) wiederverwendet. Überwiegend werden Abbruchmaterialien und damit auch wertvolle sekundäre Rohstoffe auf zumeist Sonderdeponien endgelagert, da diese mit noch anhaftenden metallhaltigen bzw. salzhaltigen Schlackeresten verunreinigt sind.

Auch die Wiederverwertung von feuerfesten Werkstoffen ist an sich bekannt. Bisher geht es dabei um die Verwertung von gebrochenem Feuerfestmaterial für neue Werkstoffen oder sogenannten Reparaturmassen. In keinem Fall geht es um die Aufbereitung von feuerfesten Werkstoffen mit dem Ziel, die einzelnen Inhaltsstoffe mit einer hohen chemischen Reinheit wiederzugewinnen.

Die DE 10 2015 216 932 A1 beschreibt ein Verfahren zum Recycling von Kompositwerkstoffen mittels der elektrohydraulischen Zerkleinerung. Nachteilig an diesem Verfahren ist jedoch, dass es einen hohen Energieverbrauch hat und nur ein geringer Aufschlussgrad erreicht wird.

Die DE 10 2006 037 914 B3 beschreibt ein Verfahren zum Zertrümmern/Sprengen spröder, hochfester keramischer/mineralischer Werk-/Verbundwerkstoffe mittels eines hochspannungsimpulstechnischen Verfahrens. Allerdings werden mit diesem Verfahren nur die Materialien aufgebrochen aber nicht für das Recycling vorgesehen. In diesem Stand der Technik gibt es keinen Hinweis, dass die durch das beschriebene Verfahren erhältlichen Endprodukte in einer solchen Qualität erhalten werden, dass sie für die Wiederverwertung geeignet sind.

Aus der DE 195 34 232 A1 ist ein Verfahren zum Zerkleinern und Brechen von Blöcken aus Stahlbeton bekannt. Im Gegensatz zum bekannten elektrohydraulischen Verfahren, bei dem die Zerkleinerung durch die Einwirkung von Stoßwellen von außen auf den Festkörper erfolgt, wird bei diesem Verfahren der Festkörper durch im Inneren erzeugte Stoßwellen gesprengt.

S. Dittrich et al.: "Effektive Aufbereitung von Müllverbrennungsschlacken mittels Hochspannungspulsen", Chemie Ingenieur Technik, 01.04.2016, 461 offenbart das Fragmentieren von Verbundmaterialien in Abfallstoffen, um in einem nachfolgenden Sortierschritt sortenreine Reststoffe zu erhalten.

Die US 2012/0132732 A1 betrifft ein Verfahren zur Wiederverwendung von Materialien und/oder Produkten, bei dem in einem ersten Schritt zwischen mindestens zwei Elektroden in einem Reaktor, der eine umgebende Flüssigkeit sowie die wiederzuverwendenden Materialien und/oder Produkte enthält, eine Reihe elektrischer Entladungen erzeugt wird.

Ausgehend von Stand der Technik liegt der Erfindung somit die Aufgabe zugrunde, ein verbessertes Verfahren zum Recyceln von Keramiken, insbesondere feuerfesten Keramiken, sowie dadurch erhältliche verbesserte Regenerate bereitzustellen, wobei insbesondere saubere Regenerate selektiv erhalten werden können und dabei nur ein geringer Energieeinsatz erforderlich ist.

Die Aufgabe wird erfindungsgemäß durch ein Verfahren nach Anspruch 1, ein Regenerat nach Anspruch 10 sowie die Verwendung des Regenerates nach Anspruch 11 gelöst. Vorteilhafte Weiterbildungen der Erfindung finden sich in den Unteransprüchen.

Als Keramik in Sinne der vorliegenden Erfindung wird eine feuerfeste Keramik eingesetzt.

Überraschenderweise wurde gefunden, dass mit dem erfindungsgemäßen Verfahren, vor allem wenn feuerfeste Keramiken als gebrauchte Keramiken eingesetzt werden, besonders saubere Regenerate selektiv erhalten werden können. Diese Regenerate, insbesondere wenn als gebrauchte Keramiken feuerfeste Keramiken verwendet werden, weisen einen Aufschlussgrad von mindestens 90 %, insbesondere 95 % und mehr auf . Der Aufschlussgrad gibt die Menge der Partikel an, die frei vorliegen, in Bezug auf die Menge der Partikel mit Anhaftungen.

Beispiele für gebrauchte feuerfeste Keramiken sind sogenannte Spülsteine in Behandlungspfannen für flüssigen Stahl, die als Hauptbestandteil Tabulartonerde (Al₂O₃, Korund) enthalten, welcher in einer Matrix aus Tonerdezement (Hochtemperaturzement) eingebunden ist. Als Nebenbestandteile enthält diese feuerfeste Keramik Edelkorund. Ein weiteres Beispiel einer feuerfesten Keramik ist Feuerbetonstein mit Bauxit, SiC und Zirkon-Korund-Schmelzkorn und einer Bindermatrix auf Basis von Tonerdezement, die als Mauerstein zur Ofenausmauerung für hochbeanspruchte Bereiche in der Zementindustrie verwendet werden können. Ferner kann als Beispiel für eine feuerfeste Keramik ein Feuerfeststein auf der Basis von Edelkorund genannt werden, der zur Ausmauerung von Schmelzwannen z.B. in der Aluminiumindustrie verwendet werden kann.

Mit dem erfindungsgemäßen Verfahren ist ein echtes Recycling von Keramiken möglich mit dem Ziel, sortenreine Regenerate mit einer hohen chemischen Reinheit zu gewinnen. Diese sortenreinen und chemisch reinen Regenerate können dabei durch die Aufbereitung von keramischen Abfällen aus der Produktion oder von Ausbruchmaterialien, also Materialien, welche bereits im Einsatz waren (gebrauchte Keramiken) mittels der elektrodynamischen Zerkleinerung erhalten werden.

Bei der elektrodynamischen Zerkleinerung werden mit einem Generator (z.B. Marx-Generator) ultrakurze Unterwasserimpulse zwischen zwei Elektroden erzeugt, die durch das zu fragmentierende Material verlaufen (Pulsanstiegszeit < 500 nsec, elektrodynamischer Effekt). Das aufzubereitende bzw. zu fragmentierende Material wird in ein mit Wasser gefülltes Prozessgefäß zwischen den beiden Elektroden platziert.

Beim elektrodynamischen Verfahren werden die Impulse in das Material gezwungen, da Feststoffe bei ultrakurzen Pulsanstiegszeiten geringere Durchschlagsfestigkeiten aufweisen als das umgebende Wasser. Im Material verlaufen die Impulse bevorzugt entlang von Phasengrenzen. Sobald die Impulse die Gegenelektrode erreichen, entsteht ein sogenannter Plasmakanal mit hohen Drücken und hohen Temperaturen, welcher das zu fragmentierende Material von innen nach außen zerreißt und somit sortenrein auftrennt. Zusätzlich werden Schockwellen im Wasser erzeugt, welche die Auftrennung zusätzlich begünstigen.

Diese Technologie der elektrodynamischen Fragmentierung ermöglicht eine sorten- bzw. phasenreine Trennung der Keramiken, was durch eine rein mechanische Aufbereitung (Brechen oder Mahlen) oder auch eine elektrohydraulische Fragmentierung (vgl. beispielsweise die vorstehend diskutierte DE 10 2015 216 932 A1) schlechter oder sogar gar nicht möglich ist. Im Vergleich zur elektrohydraulischen Fragmentierung benötigt die elektrodynamische Fragmentierung deutlich weniger Energie.

Erfindungsgemäß können also verschiedene keramische feuerfeste Materialien (Produktionsabfälle und Ausbruchmaterialien aus Schmelz- bzw. Sinteröfen) mittels der elektrodynamischen Fragmentierung aufbereitet und die nach einer anschließenden Sortierung gewonnenen Regenerate wieder in feuerfesten Werkstoffen eingesetzt werden. Der Vergleich der Materialeigenschaften (u.a. Rheologie der frischen keramischen Masse, Feuerfesteigenschaften und mechanische Eigenschaften) zwischen den Proben mit primären Rohstoffen (Originalprobe) und den Proben, bei denen die primären Rohstoffe durch erfindungsgemäß erzeugte Regenerate substituierten wurden (Regeneratproben), zeigten überraschend positive Ergebnisse der Regeneratorproben, welche so nicht erwartet werden konnten.

In einigen Ausführungsformen der Erfindung kann die elektrodynamische Zerkleinerung bei einer Spannung von 100 kV bis 600 kV, insbesondere 150 kV bis 250 kV, und ganz besonders ca. 180 kV, durchgeführt werden. In einigen Ausführungsformen der Erfindung kann die elektrodynamische Zerkleinerung mit 50 Pulsen pro Kilogramm Keramik bis 500 Pulsen pro Kilogramm Keramik, insbesondere ca. 190 Pulsen pro Kilogramm Keramik durchgeführt werden. Dabei können die Pulse mit einer Frequenz von 1 Hz bis 20 Hz, insbesondere ca. 5 Hz abgegeben werden. Wird das erfindungsgemäße Verfahren mit mindestens einem dieser Parameter durchgeführt, können in günstiger Weise besonders saubere, sortenreine Regenerate selektiv erhalten werden, die dann ohne wesentliche weitere Bearbeitungsschritte wieder verwendet werden können.

In einigen Ausführungsformen der Erfindung können für die elektrodynamische Zerkleinerung Mehrelektrodensysteme und/oder aufsetzende Elektroden eingesetzt werden. Dadurch kann das erfindungsgemäße Verfahren in besonders günstiger Weise durchgeführt werden.

In einigen Ausführungsformen der Erfindung kann das Regenerat getrocknet werden. Dieser Schritt des Trocknens kann bei erhöhter Temperatur und/oder im Vakuum erfolgen. In diesem Trocknungsschritt soll das Wasser, das durch die elektrodynamische Zerkleinerung eingebracht werden kann, soweit wie möglich entfernt werden, insbesondere auf 0-2%, damit es keine negativen Auswirkungen für das Regenerat hat.

Nach dem Trocknen kann das erhaltenen Material in Korngrößenfraktionen aufgeteilt werden, beispielsweise in Korngrößenfraktionen > 3 mm, 2-3 mm, 1-2 mm und < 1 mm. Dies kann beispielsweise durch einen Siebturm in an sich bekannter Weise erfolgen.

In einigen Ausführungsformen der Erfindung kann das Regenerat sortiert werden beispielsweise mittels Siebung, einer optischer Sortierung, der laserinduzierten Plasmaspektroskopie oder der Dichtetrennung. Diese Verfahren sind dem Fachmann an sich bekannt, so dass er weiß, wie sie durchzuführen sind.

Mit dem erfindungsgemäßen Verfahren wird ein Regenerat erhalten. Ein Regenerat im Sinne der vorliegenden Erfindung ist ein durch Aufbereitung der gebrauchten Keramik gewonnenes Produkt, das insbesondere ein sortenreines und qualitatives hochwertiges Material darstellt. Dieses Regenerat weist hinsichtlich seiner Eigenschaften eine ausreichende Qualität auf, um für die gleichen Einsatzgebiete verwendet zu werden, für die die gebrauchten Keramiken verwendet wurden. In einigen Ausführungsformen der Erfindung kann das Regenerat zur Herstellung von Keramiken verwendet werden, wobei die Keramik für dasselbe Einsatzgebiet wie die gebrauchte Keramik benutzt werden kann. Beispielsweise kann, wenn als gebrauchtes Material eine feuerfeste Keramik verwendet wird, das Regenerat eingesetzt werden, damit daraus wieder eine feuerfeste Keramik hergestellt wird. Das Regenerat hat also eine so hohe Qualität hinsichtlich seiner Eigenschaften, dass es für die Herstellung von Keramiken für den gleichen Einsatzzweck verwendet werden kann, ohne dass es zu wesentlichen Qualitätseinbußen kommt.

Überraschenderweise wurde gefunden, dass das nach dem erfindungsgemäßen Verfahren erhaltene Regenerat in qualitativ so hervorragender Qualität erhalten wird, dass es insbesondere ohne weiterer Verarbeitungs- und Aufbereitungsschritte zur Herstellung von Keramiken eingesetzt werden kann, insbesondere solche Keramiken, die für den gleichen Einsatzzweck verwendet werden können wie die im erfindungsgemäßen Verfahren eingesetzten gebrauchten Keramiken. Ohne an eine Erklärung gebunden zu sein, kann dies darauf zurückgeführt werden, dass das erhaltene Regenerat einen hohen Aufschlussgrad von mindestens 90 %, insbesondere mindestens 95 %, aufweist, wobei der Aufschlussgrad die Menge der Partikel angibt, die frei vorliegen, in Bezug auf die Menge der Partikel mit Anhaftungen.

Durch die Aufbereitung mittels elektrodynamischer Fragmentierung einer gebrauchten feuerfesten Keramik können die darin enthaltenen wertvollen Rohstoffe bzw. keramischen Halbzeuge (z.B. Tabulartonerde, Bauxite, Schamotte und Zirkonsilikate) als sortenreine Regenerate gewonnen werden und daraus auch wieder qualitativ gleichwertige feuerfeste Keramiken mit den recycelten Regeneraten hergestellt werden.

Bei der Aufbereitung von Keramiken mit dem erfindungsgemäßen Verfahren können neben dem sauber voneinander getrennten Materialgemisch (Fraktion > 1 mm) auch noch ein weiteres Materialgemisch entstehen, die Feinfraktion < 1 mm Teilchengröße. Diese Feinfraktion liegt nach der Aufbereitung im Prozesswasser vor und lässt sich mit entsprechenden Filtern vom Prozesswasser abfiltrieren. Das abfiltrierte und getrocknete Feinmaterial ist zumeist ein Materialgemisch aus keramischen Matrixmaterial (z.B. Bindermatrix) und feinen Regeneraten (z.B. Tabulartonerde, Edelkorund, etc.). Auch dieses Feinmaterial kann als Zusatzmehl bzw. als feiner Zuschlagstoff in die keramische Produktion wieder eingebracht werden. Teilweise ist dieses Feinmaterial noch hydraulisch aktiv und kann z.B. bei keramischen Grünlingen, welche vor dem Brand mit hydraulischen Zementsystemen gebunden werden (z.B. feuerfeste Keramiken), noch einen zusätzlichen Festigkeitsbeitrag liefern. Im Fall der feuerfesten Keramik, kann dieses Material z.B. als feiner Zuschlag in feuerfesten Reparatur- und Spritzmassen eingesetzt werden. Somit ist eine nahezu 100 %-ige Wiederverwertung von keramischen Abfallmaterialien durch das erfindungsgemäße Verfahren möglich.

Gegenstand der vorliegenden Erfindung ist ferner ein Regenerat, das nach dem vorstehend beschriebenen Verfahren erhältlich ist. Dieses Regenerat kann sich im Vergleich zu Regeneraten, die nach anderen Verfahren erhalten werden, beispielsweise durch Aufbrechen der gebrauchten Keramiken oder anderen Zerkleinerungsverfahren, dadurch auszeichnen, dass es einen Aufschlussgrad von mindestens 90 %, insbesondere mindestens 95 % aufweist. Ferner kann analytisch durch Schmelzspuren auf den Oberflächen des Regenerates nachgewiesen werden, dass es elektrodynamisch zerkleinert wurde. Somit sind in dieser Hinsicht die nach dem erfindungsgemäßen Verfahren mittels elektrodynamischer Fragmentierung erhältlichen Regenerate von anderen Regeneraten unterscheidbar und dieser Unterschied ist analytisch nachweisbar.

Das erfindungsgemäße Verfahren und das dadurch erhältliche Regenerat, insbesondere in den vorstehende beschriebenen Ausführungsformen, weisen eine Vielzahl von Vorteilen auf, die nachfolgend beschrieben werden.

Die beschriebene Aufbereitung von Keramiken, insbesondere von feuerfesten Keramiken, hat den Vorteil, dass Regenerate mit einer sehr hohen chemischen Reinheit gewonnen werden, welche ohne Nachteile für die Produktion von neuen hochwertigen Keramiken eingesetzt werden können. Diese Regenerate können primäre Rohstoffe und keramische Halbzeuge ersetzen, wodurch ein echtes Recycling dieser Materialien möglich ist. Der größte Vorteil ist die sorten- bzw. phasenreine Trennung der keramischen Verbundmaterialien, welche zusätzlich nicht durch mechanischen Abrieb von Mahlwerkzeugen kontaminiert werden. Weitere qualitative, wirtschaftliche und ökologische Vorteile werden im Folgenden dargestellt.

### Qualitative Vorteile:

Durch die Aufbereitung mittels elektrodynamischer Fragmentierung erhält man eine saubere Kornstruktur die den primären Rohstoffen und Halbzeugen nahezu identisch ist. Dadurch optimieren sich die qualitativen Parameter wie die notwendige Feuerfestigkeit, die Raumbeständigkeit, die Temperaturwechselbeständigkeit und die chemische Beständigkeit. Auch wichtige mechanische bzw. temperaturabhängige Festigkeiten verbessern sich durch eine im Vergleich zum herkömmlichen Verfahren saubere und reinere Kornstruktur. Es werden also Regenerate mit hoher chemischer Reinheit erhalten, die keine Anhaftungen von z.B. Schlacken oder sonstigen artfremden Bestandteilen aufweisen. Die Regenerate haben eine hohe Sortenreinheit und eine definierte Körnung.

### Wirtschaftliche Vorteile:

Durch den höheren Reinheitsgrad des Recyclingmaterials können im Produktionsprozess für keramische und feuerfeste Produkte wieder ähnlich hochwertige Produkte hergestellt werden wie es mit Primärrohstoffen möglich ist. Die derzeit angewendeten Recyclingverfahren können diese benötigte Qualität nicht bieten. Deshalb kann mit diesen Recyclingprodukten eine Wertsteigerung gegenüber den derzeit eingesetzten Regeneraten für die Produzenten erzielt werden. Die Regenerate sind wesentlich günstiger als primäre Rohstoffe, es besteht eine geringere Abhängigkeit vom Weltmarkt und Monopolstellungen (z.B. China), und die Transportkosten sind geringer. Ferner können bei Endkunden Kosten gespart werden.

### Ökologische Vorteile:

Die meisten in der Feuerfestindustrie eingesetzten mineralischen Rohstoffe fallen weltweit an und werden für den europäischen Markt zugekauft. Sie werden als Rohstoff bergmännisch in den entsprechenden Regionen abgebaut und danach durch verschiedene thermische Prozesse aufbereitet. Schamotte, Bauxit, Tonerden und Korund werden bei Temperaturen, teils bis 1700 °C, kalziniert bzw. gesintert. Schmelzgegossene mineralische Rohstoffe werden zusätzlich bei hohen Temperaturen bis 1850 °C behandelt. Hierzu werden in der Regel fossile Brennstoffe eingesetzt. Bei einem verstärkten Einsatz der mit der elektrodynamischen Zerkleinerung erzeugten Regenerate würde sich somit eine deutliche Reduktion der CO₂-Emission beim Herstellungsprozess sowie im weltweiten Transport ergeben. Weltweite Rohstoffressourcen würden erheblich entlastet werden. Die Energiebilanz kann durch Reduktion der energieaufwändigen Produktion von primären Rohstoffen reduziert werden. Die Transportkosten sind geringer, das Volumen an Deponiematerial wird reduziert. Ferner findet eine Reduzierung der Sonderdeponierung, vom Rotschlamm bei Herstellung der Rohstoffe bis zum Entsorgen von Ausbruchsmaterial der Sanierungen thermischer Anlagen statt.

Die vorliegende Erfindung ist für die keramische Industrie von großem Interesse. Die Hersteller von keramischen Produkten, vor allem die Hersteller von feuerfesten keramischen Produkten, sind stetig auf der Suche nach hochwertigen Rohstoffen und sind dabei von wenigen Lieferländern wie z.B. China abhängig. Durch den verstärkten Einsatz von hochwertigen Recyclingrohstoffen (Regeneraten) könnte dieser Abhängigkeit entgegengewirkt werden. Zum einen könnten mit der vorliegenden Erfindung die eigenen Produktionsabfälle aufbereitet werden, um wieder Rohstoffe zu gewinnen. Zum anderen gibt es jetzt schon Firmen bzw. Hersteller von keramischen Produkten, welche die keramischen Abfälle (z.B. Ausbruchmaterialien) von den Anwendern (z.B. Eisen-, Stahl,- Aluminium- und Zementindustrie) zurücknehmen, um diese nach dem heutigen Stand der Technik minderwertig zu verwerten. Ein Großteil des zurückgenommenen Materials ist allerdings für eine Verwertung zu verunreinigt, so dass dieses deponiert wird. Durch die vorliegende Erfindung können die Firmen aus den »Abfallstoffen« wieder hochwertige Rohstoffe gewinnen und die zu deponierende »Masse« stark reduzieren bzw. im Idealfall ganz verhindern. Die Vorteile für die keramische bzw. Feuerfestindustrie wären vielfältig. Mit der Gewinnung von Regeneraten mit einer hohen chemischen Reinheit und deren Wiedereinsatz ist eine Kostensenkung in der keramischen Produktion gegeben. Regenerate werden derzeit wesentlich günstiger gehandelt als primäre Rohstoffe. Zum Beispiel wird primäre Tabulartonerde mit 1.000,- Euro/Tonne gehandelt und als Regenerat mit nur 500,- bis 550,- Euro/Tonne. Durch die vorliegende Erfindung ist eine Wertsteigerung der Regenerate von 30 - 40 % gegenüber den derzeit eingesetzten Regeneraten für die Produzenten möglich. Durch eine Reduktion der energieaufwändigen Produktion von primären Rohstoffen würde es weiterhin zu einer Verbesserung der Energiebilanz und auch der CO₂-Emmission kommen.

Nachfolgend soll die Erfindung anhand von Figuren und Beispielen ohne Beschränkung des allgemeinen Erfindungsgedankens näher erläutert werden. Dabei zeigt:
Figur 1 eine schematische Darstellung der elektrodynamischen Zerkleinerung.
Figur 2 zeigt ein Beispiel einer sortenreinen Auftrennung einer Feuerfestkeramik (Spülstein) und anschließender Sortierung.
Figur 3 zeigt einen Vergleich der Kaltbiegezugfestigkeit und der Kaltdruckfestigkeit von Originalproben und Regeneratproben nach der Behandlung mit verschiedenen Temperaturen.

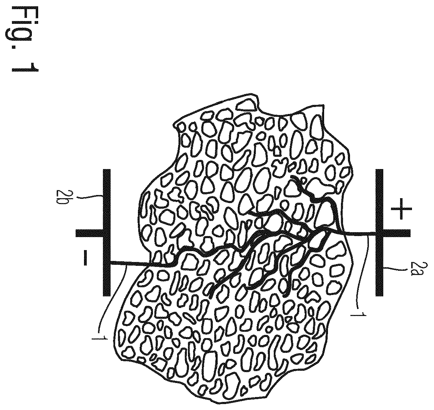

In Fig. 1 ist schematisch die elektrodynamische Fragmentierung gezeigt. Bei der elektrodynamischen Fragmentierung werden mit einem Generator (nicht gezeigt, z.B. Marx-Generator) ultrakurze Unterwasserimpulse 1 zwischen zwei Elektroden 2a, 2b erzeugt, die durch das zu fragmentierende Material 3 verlaufen (Pulsanstiegszeit < 500 nsec, elektrodynamischer Effekt). Das aufzubereitende bzw. zu fragmentierende Material 3 wird in einem Reaktionsgefäß unter Wasser zwischen die beiden Elektroden 2a, 2b platziert.

### Beispiel

Am Beispiel eines ausgewählten feuerfesten Werkstoffes wird das erfindungsgemäße Verfahren näher beschrieben. Bei dem ausgewählten Material handelt es sich um eine feuerfeste Keramik bzw. einen Feuerfeststein, welcher z.B. als sogenannter Spülstein in Behandlungspfannen für flüssigen Stahl eingesetzt wird. Hauptbestandteil dieser Feuerfestkeramik ist die wertvolle Tabulartonerde (Al₂O₃, Korund), welche in einer Matrix aus Tonerdezement (Hochtemperaturzement) eingebunden ist. Als Nebenbestandteil enthält diese Feuerfestkeramik auch wertvollen Edelkorund.

Als Regenerat interessante Inhaltsstoffe: Tabulartonerde Chemische Zusammensetzung einer originalen Tabulartonerde

| **Oxid** | **Ma. -%** |
|---|---|
| Al₂O₃ | 99,5 |
| Fe₂O₃ | 0,08 |
| SiO₂ | 0,04 |
| Na₂O | 0,30 |
| CaO | 0,02 |

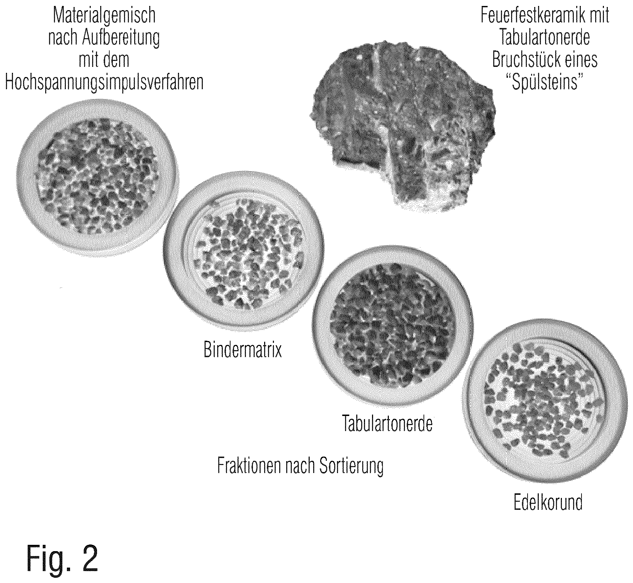

Die feuerfeste Keramik (Spülstein) wurde für die elektrodynamische Fragmentierung grob vorzerkleinert bzw. vorgebrochen, um faustgroße Stücke zu erhalten. Anschließend wurden die vorgebrochenen Stücke in der Fragmentierungsanlage prozessiert. Dabei wurden Hochspannungsimpulse mit einer Spannung von 180 kV auf die unter Wasser befindliche feuerfeste Keramik abgegeben. Je Kilogramm Material wurden ca. 190 Pulse mit einer Frequenz von 5 Hz abgegeben. Der Energieverbrauch betrug weniger als 0,05 kWh/kg. Durch die Hochspannungsimpulsbehandlung wurde die Tabulartonerde und auch der Edelkorund aus der Bindermatrix (abgebundener Tonerdezement) sortenrein herausgetrennt bzw. freigelegt. Das erhaltene Materialgemisch aus Tabulartonerde, Edelkorund und Bindermatrix wurde getrocknet und anschließend über einen Siebturm in die Korngrößenfraktionen >3 mm, 2-3 mm, 1-2 mm und < 1mm aufgeteilt. Diese Fraktionen wurden dann mittels optischer Sortierung aussortiert, um die Tabulartonerde und den Edelkorund als Regenerate zu erhalten. In diesem Fall war die optische Sortierung ausreichend, da die weiße Tabulartonerde sowie der glasartige transparente Edelkorund deutlich von der grauen bzw. blau eingefärbten Bindermatrix unterscheidbar waren. Nach dem Sortierprozess lagen die Tabulartonerde und der Edelkorund in verschiedenen Korngrößenfraktionen sortenrein vor (siehe Fig. 2).

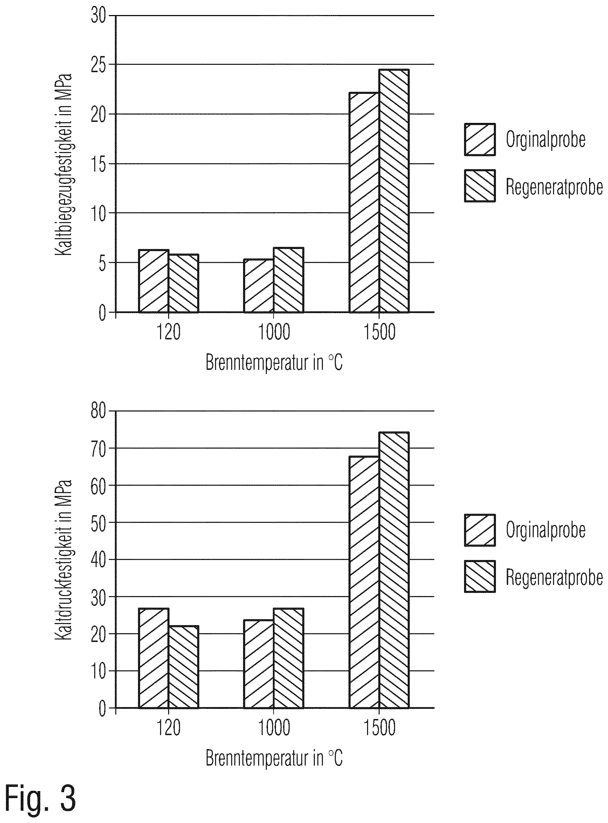

Die als Regenerat gewonnene Tabulartonerde wurde dann als feuerfester Zuschlag in eine handelsübliche keramische Feuerfestmasse auf Tonerdezementbasis eingesetzt. Dabei wurde die primäre Tabulartonerde durch die recycelte Tabulartonerde nahezu 1:1 entsprechend der vorgegebenen Sieblinie ersetzt. Von beiden keramischen Massen (Masse mit originalen bzw. primären Tabulartonerde und Masse mit erfindungsgemäßer recycelter Tabulartonerde) wurden Proben (Prüfkörperprismen 4 x 4 x 16 cm³) hergestellt. Bei beiden Massen konnte mit dem gleichen w/z-Wert (Verhältnis Wasser : Zement) gearbeitet werden. Die rheologischen Eigenschaften waren identisch. Die hergestellten Proben wurden nach ca. 24 Stunden aus der Form genommen und für weitere 24 Stunden bei 120 °C im Trockenschrank getrocknet. Dies zeigt, dass durch den Einsatz der erfindungsgemäß gewonnenen Tabulartonerde es nicht zu einem erhöhten Wasseranspruch, Abbindeproblemen oder verstärkter Rissbildung beim Abbinden und Trocknen kommt, wie es bekanntermaßen beim Einsatz von gebrochenen Regeneraten nach dem Stand der Technik üblich ist. Nach der Trocknung wurden ein Teil der Proben bei 1000 °C und ein weiterer Teil bei 1500 °C im Hochtemperaturofen gebrannt. Bei allen Proben war die Hochtemperaturstabilität gegeben und es konnte kein Unterschied zwischen den Proben mit primärer Tabulartonerde (Originalproben) und den Proben mit recycelter Tabulartonerde (Regeneratproben) festgestellt werden. Weiterhin wurden auch bei allen Proben (getrocknet bei 120°C und gebrannt bei 1000 °C bzw. 1500 °C) die mechanischen Festigkeiten (Kaltdruckfestigkeit und Kaltbiegezugfestigkeit) geprüft. Die Ergebnisse waren überraschend. Der Vergleich der Festigkeitswerte bei den rein getrockneten Proben aber auch bei den gebrannten Proben zeigten keine signifikanten Unterschiede im Vergleich zu den Originalproben. Teilweise waren die Festigkeitswerte bei den Regeneratproben gegenüber den Originalproben sogar etwas höher (Fig. 3). Auch rein optisch betrachtet ist kein Unterschied zwischen den Proben mit den Regeneraten und den Proben mit Originalmaterial zu erkennen.

Phasenbestand des gewonnenen Regenerates (Tabulartonerde):

| **Phase** | **Chem. Formel** | **Ma. -%** |
|---|---|---|
| Korund (Tabularetonerde) | Al₂O₃ | 94 |
| β-Tonerde | Al₂O₃ | 5 |
| Spinell | MgAl₂O₄ | 1 |

Nachfolgend ist die chemische Zusammensetzung des Regenerates (Tabulatortonerde) angegeben:

| **Oxid** | **Ma. -%** |
|---|---|
| Al₂O₃ | 99,4 |
| Fe₂O₃ | u.d.B |
| SiO₂ | u.d.B. |
| Na₂O | 0,20 |
| CaO | 0,10 |
| Co₃O₄ | 0,01 |

Dieses Beispiel zeigt, dass durch die Aufbereitung mittels elektrodynamischer Fragmentierung eines gebrauchten Feuerfeststeins die darin enthaltenen wertvollen Rohstoffe bzw. keramischen Halbzeuge (z.B. Tabulartonerde) als sortenreine Regenerate gewonnen werden können und daraus auch wieder ein qualitativ gleichwertige Feuerfeststein mit den recycelten Regeneraten hergestellt werden kann.

Vorstehend beschriebene Vorgehensweise wurde auch auf andere feuerfeste Keramiken wie z.B. Korundsteine oder Zirkon-Bauxit-Steine, welche bereits im Einsatz waren, angewendet. In allen Fällen konnten durch die elektrodynamische Fragmentierung die wertvollen Bestandteile (wie z.B. Edelkorund, Zirkon, Bauxit) aus den Abfallmaterialien als sorten- und chemisch reine Regenerate gewonnen werden, welche wieder ohne Nachteile in neue feuerfeste Keramiken eingebracht werden konnten.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung »erste« und »zweite« Ausführungsformen definieren, so dient diese Bezeichnung der Unterscheidung zweier gleichartiger Ausführungsformen, ohne eine Rangfolge festzulegen.

## Patentansprüche

1. Verfahren zum Recyceln von Keramiken, wobei gebrauchte Keramiken mittels elektrodynamischer Zerkleinerung behandelt werden, wodurch Regenerate erhalten werden, **dadurch gekennzeichnet, dass** die Regenerate einen Aufschlussgrad von mindestens 90 % aufweisen, und dass die Keramik eine feuerfeste Keramik ist.

2. Verfahren nach Anspruch 1, **dadurch gekennzeichnet, dass** die elektrodynamische Zerkleinerung bei einer Spannung von 100 kV bis 600 kV durchgeführt wird.

3. Verfahren nach einem der Ansprüche 1 bis 2, **dadurch gekennzeichnet, dass** die elektrodynamische Zerkleinerung mit 50 Pulsen pro Kilogramm Keramik bis 500 Pulsen pro Kilogramm Keramik durchgeführt wird.

4. Verfahren nach Anspruch 3, **dadurch gekennzeichnet, dass** die Pulse mit einer Frequenz von 1 Hz bis 20 Hz abgegeben werden.

5. Verfahren nach einem der Ansprüche 1 bis 4, **dadurch gekennzeichnet, dass** Mehrelektrodensysteme und/oder aufsetzenden Elektroden für die elektrodynamische Zerkleinerung eingesetzt werden.

6. Verfahren nach einem der Ansprüche 1 bis 5, **dadurch gekennzeichnet, dass** das Regenerat getrocknet wird.

7. Verfahren nach einem der Ansprüche 1 bis 6, **dadurch gekennzeichnet, dass** das Regenerat sortiert wird.

8. Verfahren nach Anspruch 7, **dadurch gekennzeichnet, dass** das Sortieren erfolgt mittels Siebung, optischer Sortierung, laserinduzierter Plasmaspektroskopie oder Dichtetrennung.

9. Verfahren nach einem der Ansprüche 1 bis 8, **dadurch gekennzeichnet, dass** das Regenerat zur Herstellung von Keramiken, insbesondere Feuerfestkeramiken, eingesetzt wird.

10. Regenerat, erhältlich nach dem Verfahren nach einem der Ansprüche 1 bis 9.

11. Verwendung des Regenerates nach Anspruch 10 zur Herstellung von Keramiken, insbesondere Feuerfestkeramiken.

## Claims

1. Method for recycling ceramics, wherein used ceramics are treated by means of electrodynamic comminution so as to obtain regenerated materials, **characterized in that** the regenerated materials have a degree of liberation of at least 90 % and **in that** the ceramic is a refractory ceramic.

2. Method according to claim 1, **characterized in that** the electrodynamic comminution is carried out at a voltage of 100 kV to 600 kV.

3. Method according to any of claims 1 to 2, **characterized in that** the electrodynamic comminution is carried out with 50 pulses per kilogram of ceramic to 500 pulses per kilogram of ceramic.

4. Method according to claim 3, **characterized in that** the pulses are emitted at a frequency of 1 Hz to 20 Hz.

5. Method according to any of claims 1 to 4, **characterized in that** multi-electrode systems and/or attached electrodes are used for electrodynamic comminution.

6. Method according to any of claims 1 to 5, **characterized in that** the regenerated material is dried.

7. Method according to any of claims 1 to 6, **characterized in that** the regenerated material is sorted.

8. Method according to claim 7, **characterized in that** the sorting is carried out by means of screening, optical sorting, laser-induced plasma spectroscopy or density separation.

9. Method according to any of claims 1 to 8, **characterized in that** the regenerated material is used for the production of ceramics, in particular refractory ceramics.

10. Regenerated material obtainable by the method according to any of claims 1 to 9.

11. Use of the regenerated material according to claim 10 for the production of ceramics, in particular refractory ceramics.

## Revendications

1. Procédé de recyclage de céramiques, dans lequel des céramiques usagées sont traitées par fragmentation électrodynamique, ce qui permet d'obtenir des produits régénérés,
**caractérisé en ce que** les produits régénérés présentent un taux de désagrégation d'au moins 90 %, et
**en ce que** la céramique est une céramique réfractaire.

2. Procédé selon la revendication 1,
**caractérisé en ce que** la fragmentation électrodynamique est effectuée à une tension comprise entre 100 kV et 600 kV.

3. Procédé selon l'une des revendications 1 à 2,
**caractérisé en ce que** la fragmentation électrodynamique est effectuée avec 50 impulsions par kilogramme de céramique jusqu'à 500 impulsions par kilogramme de céramique.

4. Procédé selon la revendication 3,
**caractérisé en ce que** les impulsions sont émises à une fréquence comprise entre 1 Hz et 20 Hz.

5. Procédé selon l'une des revendications 1 à 4,
**caractérisé en ce que** des systèmes à plusieurs électrodes et/ou des électrodes rapportées sont utilisés pour la fragmentation électrodynamique.

6. Procédé selon l'une des revendications 1 à 5,
**caractérisé en ce que** le produit régénéré est séché.

7. Procédé selon l'une des revendications 1 à 6,
**caractérisé en ce que** le produit régénéré est trié.

8. Procédé selon la revendication 7,
**caractérisé en ce que** le tri s'effectue par tamisage, tri optique, spectroscopie de plasma induite par laser, ou séparation par densité.

9. Procédé selon l'une des revendications 1 à 8,
**caractérisé en ce que** le produit régénéré est utilisé pour la fabrication de céramiques, en particulier de céramiques réfractaires.

10. Produit régénéré pouvant être obtenu par le procédé selon l'une des revendications 1 à 9.

11. Utilisation du produit régénéré selon la revendication 10 pour la fabrication de céramiques, en particulier de céramiques réfractaires.
